# EUROPÄISCHE PATENTSCHRIFT

(11) **EP 0 483 187 B1**
(45) Veröffentlichungstag und Bekanntmachung des Hinweises auf die Patenterteilung: **09.06.1993**
(21) Anmeldenummer: 90910551.2
(22) Anmeldetag: 16.07.1990
(51) Int. Cl.: B65D 17/00

(54) **UNBEABSICHTIGTE ENTLEERUNG VERHINDERNDER VERSCHLUSS FÜR GETRÄNKEDOSEN UND ANDERE VERPACKUNGEN**
CLOSURE FOR PREVENTING UNINTENTIONAL EMPTYING OF DRINK CANS AND OTHER PACKAGINGS
FERMETURE EMPECHANT L'ECOULEMENT NON INTENTIONNEL POUR BOITES DE BOISSON ET AUTRES EMBALLAGES

(30) Priorität: 18.07.1989 DE 3923721
(43) Veröffentlichungstag der Anmeldung: 06.05.1992
(73) Patentinhaber: KRÜGER, Gerhard, D-25767 Bunsoh (DE)
(72) Erfinder: KRÜGER, Gerhard, D-25767 Bunsoh (DE)
(74) Vertreter: Scholz, Hartmut, Dipl.-Ing. Patentanwalt
(86) Internationale Anmeldenummer: DE9000529
(87) Internationale Veröffentlichungsnummer: WO9101253

(56) Entgegenhaltungen:
- US-A- 2 031 845

## Beschreibung

Die Erfindung betrifft eine Verpackung, insbesondere Getränkedose, mit einem versiegelten Deckel und einem, mindestens eine Deckelöffnung entsiegelnden ersten Verschlußmittel und mit einem der Innenseite des Deckels zugeordneten, als Feder ausgebildeten zweiten Verschlußmittel, das nach Entsiegelung der Deckelöffnung diese von innen durch Federkraft verschlossen hält und dem ein außenliegendes Betätigungsmittel zu seiner Betätigung zugeordnet ist (siehe Oberbegriff der Anspruchs 1).

Unter den derzeit favorisierten Verpackungen nehmen solche aus metallischem Substanzen hergestellte oder mit solchen kombinierte einen breiten Raum ein. Beispielhaft aufgeführt und betrachtet seien hier Getränkedosen, die aus dem eigentlichen Dosenkörper und aus einem gesonderten Deckel bestehen. In den Dosenkörper wird der zu verpackende Inhalt, beispielsweise ein Getränk, gefüllt, bevor anschließend der Deckel dichtschließend mit diesem verbunden wird. So ergibt sich eine Verpackung, die einen Sturz aus größerer Höhe begegnen kann, wobei die auftretenden Kräfte eine Verformung bewirken können und dennoch der Inhalt nicht generell auslaufen muß. Wärme und Kälte werden schnell durch die Verpackungsmaterialien abgeleitet, wodurch sich derartige Behälter leichter und schneller kühlen lassen. Wird dabei eine kritische Temperatur unter- oder überschritten, so wird die metallische Verpackung nicht so schnell beschädigt, wie beispielsweise Glas.

Es mag viele Gründe geben, welche Hersteller und Verbraucher motivieren, sich dieser Verpackung zu bedienen. Neben möglicherweise bestehenden Kostenvorteilen mag auch das anteilig geringe Gewicht einen Kostenfaktor darstellen. Das Material der Getränkedose ist durchweg so dünnwandig, daß an einer vorbestimmten Stelle des Deckels, die entsprechend mechanisch präpariert ist, durch die Hebelkraft, welche mit einem Aufreißring ausgeübt werden kann, eine Verschlußöffnung freigeben wird.

Alle bestehenden Verpackungssysteme, wie beispielsweise Schraubverschlüsse, haben den Nachteil, daß sie nicht mit einer Hand zu betätigen sind. Es wird immer erforderlich, mit der zweiten Hand den Behälter selbst zu halten oder komplizierte Ersatzfunktionen zu finden.

Gerade Getränkedosen nehmen im Reiseproviant eine beachtliche Stellung ein. Insbesondere Getränkedosen, deren Inhalt mit Coffein oder vergleichbaren versetzt ist, limonadenahnliche Getränke aber auch alle alkoholhaltigen Getränke ziehen Insekten an. Diese Insekten, insbesondere Wespen, kriechen gerne unbemerkt in die Dosen und .können dann beim anschließenden Trinken leicht mit verschluckt werden. Bei den so verschluckten, oft halbtoten Insekten kann es noch zu reflexartigem Stechen in die Speiseröhre kommen, wodurch nicht selten tödlich verlaufende Schwellungen tiervorgerufen werden können. Dazu ist es aus der US-A 20 31 845 bekannt, den Deckel mit einem seiner Innenseite zugeordneten zweiten Verschlußmittel zu versehen. Dieses zweite Verschlußmittel ist als Feder ausgebildet und verschließt die Deckelöffnung nach dem Entfernen und damit Entsiegeln eines ersten Verschlußmittels von innen. Nachteilig dabei ist, daß das außenliegende erste Verschlußmittel als Wegwerfteil ausgebildet ist. Außendem ist zur Betätigung, dh zum Öffnen des innenliegenden zweiten Verschlußmittels eine zweite Deckelöffnung erforderlich, durch die es aus seine Verschlußposition gedrückt werden muß. Diese zweite Deckelöffnung bedeutet einen erhöhten Produktionsaufwand, da diese zweite Öffnung ebenfalls abgedichtet werden muß und eine weitere Möglichkeit zum unbeabsichtigten Auslaufen bietet, beispielsweise wenn die Dose umkippt.

Aufgabe der vorliegenden Erfindung ist es, einen Verschluß für eine Getränkedose mit einem zweiten Verschlußmittel, das nach dem ersten Aufreißen die Entnahmeöffnung wieder verschließt zu schaffen, der mit geringen Produktionskosten herstellbar ist und einen geringen Materialaufwand erforderlich macht.

Gelöst wird diese Aufgabe dadurch, daß gemäß kennzeichen des Anspruchs 1 das erste Verschlußmittel als Betätigungsmittel für das zweite Verschlußmittel ausgebildet ist und an dem Deckel verbleibend zu wiederholbaren, weiteren Freigaben mit dem zweiten Verschlußmittel in Wirkverbindung bringbar ist. Durch diese Maßnahmen wird ein Verschluß für Getränkedosen geschaffen, bei der das versiegelnde erste Verschlußmittel in Verbindung mit dem Deckel bleibt und nicht als zusätzliches Wegwerfteil anfällt, es wird vielmehr als Betätigungsmittel zum Öffnen des zweiten Verschlußmittels gegen dessen Federkraft eingesetzt. Nach der Entsiegelung wird das Auslaufen von Flüssigkeit aus der Dose verhindert und das Eindringen von anderen Substanzen unterbunden. Es wird so eine Getränkedose geschaffen, bei der von innen ein als Feder ausgebildetes zweites Verschlußmittel so auf die Deckelöffnung wirkt, daß diese auch nach dem erstmaligen Öffnen fortlaufend verschlossen und gegen unbeabsichtigtes Entleeren gesichert bleibt. Das als Aufreißring ausgebildete erste Verschlußmittel überwindet mit seinem Hebelarm die Federkraft des zweiten Verschlußmittels und drückt dieses bei einer beabsichtigten Entnahme in das Doseninnere.

Weitere vorteilhafte Maßnahmen sind in den Unteransprüchen beschrieben. Die Erfindung ist anhand eines Ausführungsbeispiels in der beiliegenden Zeichnung dargestellt und wird nachfolgend näher beschrieben; es zeigt:
- Figur 1: einen Schnitt mit Darstellung einer Getränkedose, wie sie allgemein in Benutzung ist, mit erfindungsgemäßen Verschlußmitteln vor dem ersten Öffnen;
- Figur 2: den gleichen Schnitt wie in der Figur 1, jedoch mit einer nach der mit einem nach dem ersten Öffnen um 180° auf die entgegengesetzte Seite geschwenktem ersten Verschlußmittel.

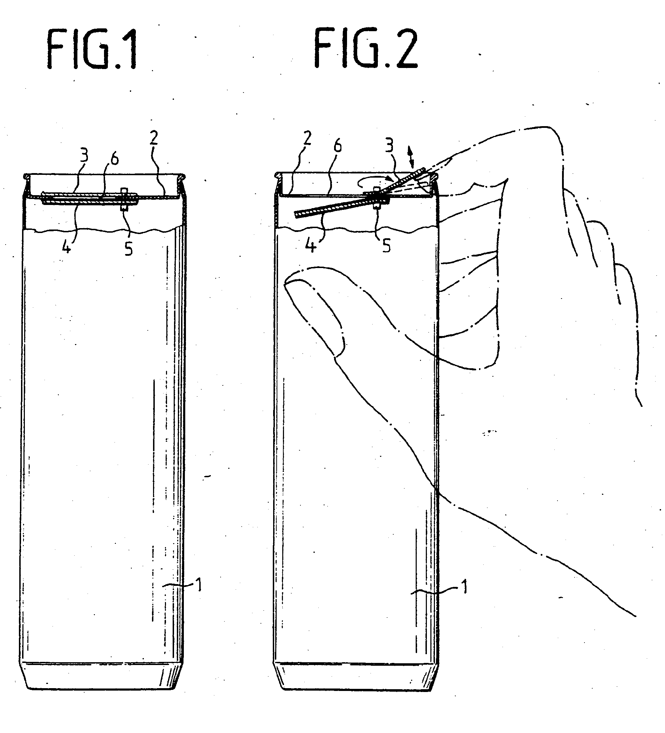

Wie die Figur 1 zeigt, ist die Getränkedose 1 mit einem Deckel 2 verschlossen. Auf der außenliegenden Oberseite des Deckels 2 ist ein erstes Verschlußmittel 3 mit einem Verbindungsmittel 5, beispielsweise einem Niet oder einem Schweißpunkt befestigt. Das erste Verschlußmittel 3 ist als ein vorgeprägtes Siegel ausgebildet, welches die Dosenöffnung 6 verschließt und als eine Aufreißvorrichtung ausgebildet ist. Auf der innenliegenden Unterseite des Deckels 2 ist ein zweites Verschlußmittel 4 vorgesehen, das über den Niet 5 mit dem ersten Verschlußmittel 3 verbunden ist.

Wie die Fig. 2 zeigt, ist eine Entnahme als Ein-Hand-Bedienung möglich, da die Getränkedose 1 mit einer Hand gehalten und gleichzeitig der Zeigefinger unter das als Aufreißvorrichtung ausgebildete erste Verschlußmittel 3 geschoben werden kann. Das erste Verschlußmittel 3 ist als ein zweiarmiger Hebel ausgebildet, dessen längerer Hebelarm mit dem Zeigefinger nach oben bewegt werden kann, während der kürzere Hebelarm durch die Dosenöffnung 6 gegen das federnd verschließende zweite Verschlußmittel 4 nach unten bewegt wird. Das erste Verschlußmittel 3 kann dazu um den Niet 5 um 180° in eine gegen das zweiten Verschlußmittel 4 wirkende Position geschwenkt werden.

Die gesamte, Vorrichtung läßt sich fertigungstechnisch leicht bewerkstelligen, da lediglich das zweite Verschlußmittel 3 mit einem geeigneten Verbindungsmittel, beispielsweise einem durch den Dosendeckel 2 abgedichtet geführten Niet 5 oder einer vergleichbarer Anordnung mit diesem Dekkel 2 und dem ersten Verschlußmittel 3 verbunden ist.

Prinzipiell könnte der bisherige Dosenverschluß entfallen, allerdings werden Getränkedosen 1 häufig von verschiedenen Herstellern bezogen und vielfach aus unterschiedlichen Gründen, beispielsweise heiß, befüllt.

Dadurch bedingt kann ein Vakuum, welches durch abkühlende Flüssigkeiten entsteht, gegen die Federkraft anwirken, weshalb ein geeigneter Verschluß aus günstig erscheinenden Materialien gegen eine Anfangskraft der Aufreißvorrichtung wirken kann. Diese Kraft kann geringer bemessen werden, wenn das erste, obere Verschlußmittel 3 konisch gegen die Deckelöffnung 6 wirkt und nach dem erstmaligen Öffnen mit dem Deckel 2 verbunden verbleibt.

Unter Berücksichtigung dieser Lösung ergibt sich folgende Vorgehensweise: Die Aufreißvorrichtung wird nach oben geschwenkt und trennt, da mit der Aufreißvörrichtung verbunden, einen Hilfsverschluß von der künftigen Verschlußvorrichtung, danach wird die Aufreißvorrichtung erst in die entgegengesetzte Richtung gedreht werden können.

Die zeichnerische Darstellung zeigt eine von verschiedenen denkbaren Möglichkeiten, soll insbesondere andere beten des Einwirkens auf den unteren Verschluß nicht ausschließen. Hier wird beispielsweise empfohlen, den Ring nach oben zu schwenken. Die Erfindung umfaßt auch denkbare Kombinationen und andere Arten und Formen der Verpackung, solange der Rahmen der in Anspruch 1 definierten Erfindung nicht verlassen wird.

## Patentansprüche

1. Verpackung, insbesondere Getränkedose, mit einem versiegelten Deckel (2) und einem, mindestens eine Deckelöffnung (6) entsiegelnden ersten Verschlußmittel (3) und mit einem der Innenseite des Deckels zugeordneten,, als Feder ausgebildeten zweiten Verschlußmittel (4), das nach Entsiegelung der Deckelöffnung diese von innen durch Federkraft verschlossen hält und dem ein außenliegendes Betätigungsmittel zu seiner Betätigung zugeordnet ist, dadurch gekennzeichnet, daß das erste Verschlußmittel (3) als Betätigungsmittel für das zweite Verschlußmittel (4) ausgebildet ist und an dem Deckel (2) verbleibend zu wiederholbaren, weiteren Freigaben mit dem zweiten Verschlußmittel (4) in Wirkverbindung bringbar ist.

2. Verpackung nach Anspruch 1, dadurch gekennzeichnet, daß das erste Verschlußmittel (3) nach der Entsiegelung der Deckelöffnung (6) in eine Position verschwenkbar ist, in der es bei einer Bewegung vom Deckel (2) weg das zweite Verschlußmittel (4) in eine Öffnungsstellung verschwenkt.

3. Verpackung nach den Ansprüchen 1 und 2 dadurch gekennzeichnet, daß das erste Verschlußmittel (3) und das zweite Verschlußmittel (4) über ein gemeinsames Verbindungsmittel (5) miteinander verbunden sind.

4. Verpackung nach den Ansprüchen 1 bis 3, dadurch gekennzeichnet, daß das das erste Verschlußmittel (3) und das zweite Verschlußmittel (4) miteinander verbindende Verbindungsmittel ein abgedichtet durch den Deckel (2) geführter Niet (5) ist.

5. Verpackung nach den Ansprüchen 1 bis 4, dadurch gekennzeichnet, daß das erste Verschlußmittel (3) als ein gegen das zweite Verschlußmittel (4) wirkender, dessen Federkraft überwindender Hebelarm ausgebildet ist, der bei einer Bewegung vom Deckel (2) weg das zweite Verschlußmittel (4) in eine Öffnungsstellung verschwenkt.

6. Verpackung nach den Ansprüchen 1 bis 5, dadurch gekennzeichnet, daß das erste Verschlußmittel (3) nach Entsiegelung der Deckelöffnung (6) durch diese hindurch zu wiederholbaren, weiteren Freigaben mit dem zweiten Verschlußmittel (4) in Wirkverbindung bringbar ist.

## Claims

1. Package, particularly beverage can, comprising a sealed end (2), first closure means (3) for unsealing at least one opening (6) in said end, and second closure means (4) associated with the product side of said end and configured to constitute a spring, said second closure means exerting a spring force from the product side to keep the opening in the end in a closed condition and having externally disposed actuating means associated therewith, characterized in that said first closure means (3) is configured to constitute the actuating means for said second closure means (4) and stays connected with end (2) for repeated further engagement with second closure means (4) for the release thereof.

2. Package as in claim 1, characterized in that first closure means (3) is adapted to be pivoted, following the unsealing of opening (6) in said end, into a position in which when moved away from end (2) it pivots second closure means (4) to an open position thereof.

3. Package as in claims 1 and 2, characterized in that first closure means (3) and second closure means (4) are interconnected through common connecting means.

4. Package as in claims 1 to 3, characterized in that the connecting means interconnecting first closure means (3) and second closure means (4) comprises a rivet (5) extending through end (2) in a sealed relationship thereto.

5. Package as in claims 1 to 4, characterized in that first closure means (3) has the form of a lever acting against second closure means (4) to overcome the spring force thereof, said lever when moved away from end (2) pivoting second closure means (4) into an open position.

6. Package as in claims 1 to 5, characterized by first closure means (3) being adapted to be engaged, following the unsealing of opening (6) in said end, with second closure means (4) through said opening for repeated further releases of closure means (4).

## Revendications

1. Emballage, particulièrement boîte de boisson, avec un couvercle (2) scellé et un premier moyen d'obturation (3) apte à desceller au moins une ouverture (6) dans le couvercle et un deuxième moyen d'obturation (4) associé à la face intérieure du couvercle et réalisé sous forme de ressort qui, après le descellement de l'ouverture dans le couvercle, maintient celle-ci fermée de l'intérieur par son effet de ressort et auquel est associé un moyen extérieur de commande, caractérisé par le fait que le premier moyen d'obturation (3) est réalisé sous forme de moyen de commande du deuxième moyen d'obturation (4) et qu'il peut être mis en rapport d'action avec le deuxième moyen d'obturation (4) de sorte à débloquer celui-ci à plusieurs reprises tout en restant lié au couvercle (2).

2. Emballage suivant la revendication citée en 1, caractérisé par le fait que le premier moyen d'obturation (3), après le descellement de l'ouverture du couvercle (6), peut être tourné dans une position dans laquelle il fait pivoter le deuxième moyen d'obturation (4) dans une position d'ouverture, une fois déplacé de sorte à l'éloigner du couvercle (2).

3. Emballage suivant les revendications citées un 1 et 2, caractérisé par le fait que le premier moyen d'obturation (2) et le deuxième moyen d'obturation (4) sont liés par un élément de jonction (5) commun.

4. Emballage suivant les revendications citées de 1 à 3, caractérisé par le fait que l'élément de jonction liant le premier moyen d'obturation (3) au deuxième moyen d'obturation (4) est un rivet (5) traversant le couvercle (2) de façon étanche.

5. Emballage suivant les revendications citées de 1 à 4, caractérisé par les fait que le premier moyen d'obturation (3) est réalisé sous forme d'un bras de levier qui, agissant à l'encontre du deuxième moyen d'obturation (4), surmonte l'action de ressort de celui-ci et, une foes déplacé de sorte à s'éloigner du couvercle (2), fait pivoter le deuxième moyen d'obturation (4) dans une position d'ouverture.

6. Emballage suivant les revendications citées de 1 à 5, caractérisé par le fait que le premier moyen d'obturation (3), après le descellement de l'ouverture (6) dans le couvercle, peut, à travers cette ouverture, être mis en rapport d'action avec le deuxième moyen d'obturation (4) pour débloquer celui-ci à plusieurs reprises.
